# EUROPEAN PATENT SPECIFICATION

(11) **EP 4 495 813 B1**
(45) Date of publication and mention of the grant of the patent: **18.11.2026**
(21) Application number: 23186502.3
(22) Date of filing: 19.07.2023
(51) Int. Cl.: G06F 21/53, G06F 21/57, G06Q 50/06, H04L 67/12, G06F 9/455, H04Q 9/00

(54) **SYSTEM FOR METERING**
MESSSYSTEM
SYSTÈME DE MESURE

(43) Date of publication of application: 22.01.2025
(73) Proprietor: ABB E-mobility B.V., 2629 JG Delft (NL)
(72) Inventor: DOPPELHAMER, Jens, 68526 Ladenburg (DE); KOOLEN, Gertjan, 5622 CV Eindhoven (NL); VAN DER LINDEN, Jean Pierre Albers, 5731NN Mierlo (NL); COHEN, Andrew, 67061 Ludwigshafen am Rhein (DE); MESSINGER, Christian, 13187 Berlin (DE)
(74) Representative: Zimmermann & Partner Patentanwälte mbB

(56) References cited:
- CN-A- 114 584 614
- US-A1- 2020 380 619
- HARTIG HERMANN ET AL: "Lateral Thinking for Trustworthy Apps", PROCEEDINGS OF THE INTERNATIONAL CONFERENCE ON DISTRIBUTED COMPUTING SYSTEMS, IEEE COMPUTER SOCIETY, US, 5 June 2017 (2017-06-05), pages 1890 - 1899, XP033123095, ISSN: 1063-6927, [retrieved on 20170713], DOI: 10.1109/ICDCS.2017.29

## Description

### FIELD OF INVENTION

The present invention relates to a system for metering and to a charging system for electrical vehicles.

### BACKGROUND OF THE INVENTION

Systems for metering are widely used and well known in the state-of-the-art. There are for example systems for metering our current consumption or more general an energy consumption. Such systems may have to be certified. This may be a challenge over a lifetime of such systems.

It has now become apparent that there is a further need to provide a system for metering.

US 2020/380619 A1 relates to a utility meter supporting a remote display. For example, a microprocessing unit has processor cores, wherein a first core is responsible for running an operating system as well as running legacy code (e.g., applications traditionally built into firmware of a meter). A second core is responsible for running Java applications or other types of applications. A third core is responsible for running metrology applications, such as non-time-critical metrology applications. A fourth core is responsible for all other operations of the meter. A meter can be capable of running one or more virtual machines or container applications. CN 114 584 614 A relates to an information interaction method used between a smart terminal and a collection terminal. Härtig, Hermann, et al.,"Lateral Thinking for Trustworthy Apps", Proceedings of the International Conference on Distributed Computing Systems, IEEE Computer Society, 5 June 2017, pages 1890-1899, XP033123095, relates, for example, to a Smart Meter Appliance.

### SUMMARY OF THE INVENTION

In view of the above, it is an object of the present invention to provide a system for metering, in particular it is an object of the present invention to provide an improved system for metering. These and other objects, which become apparent upon reading the following description, are solved by the subject matter of the independent claims. The dependent claims refer to preferred embodiments of the invention.

In one aspect of the present disclosure, a system according to independent claim 1 is provided. A system for metering comprises:
a metering device for metering;
a computer unit configured to provide a virtualization of its hardware ressources to a first group and to a second group;
the computer unit further configured to execute metering software for the metering device on the first group and non metering software on the second group such that the non metering software cannot interfere with the metering software.

The virtualization comprises a trusted execution environment for the first group.

In an embodiment, the virtualization may be based on a hyper visor.

In an embodiment, the virtualization may be based on container technology.

In an embodiment, the system may further comprise an exclusive interface for connecting the metering device with the computer unit, and wherein the metering device and the computer unit may be connected by the exclusive interface.

The system further comprises a screen for displaying metering data and non metering data.

The computer unit is further configured to generate a display composition for metering data and non metering data on the screen, wherein a software for generating the display composition is executed in the first group.

In an embodiment, the computer unit may be configured to provide an software interface for data exchange between the non metering software and the screen, wherein the software interface may be executed in the first group.

In an embodiment, the computer unit may be configured to provide an access to the metering device exclusively via the metering software.

In an embodiment, the metering device may be an energy meter.

In an embodiment, the system may be configured to be booted by secure boot.

In an embodiment, the system may be provided,
wherein the system may be configured to provide an integrity check in a start-up phase; and/or
wherein an integrity of the metering software may be ensured using OS kernel integrity measurement features; and/or
wherein a proof of an integrity of the metering SW may be shown on the screen; and/or
wherein an integrity of the metering software can be proven to remote observers using remote attestation; and/or
wherein integrity measurements of the integrity check may be logged inside the first group; and/or
wherein a failed integrity check may lead to disabling the metering device or to an operation of the system without metering or to an operation of the sytem with limited metering functionality.

In an embodiment, the first group and the second group may be isolated by at least one of the following: CPU rings/privilege, exception level, memory management unit (MMU), TrustZone hardware (HW).

A further aspect of the present disclosure relates to a charging station for electrical vehicles, comprising a system as described above and below.

A further aspect of the present disclosure relates to the use of a system as described above and below in a charging station.

A last aspect of the present disclosure relates to a use of a system described above in a charging station.

### DEFINITIONS

The term system for metering, as used herein, has to be understood broadly and may relate to any system that comprises a metering device. The system may comprise for example an energy meter, a pressure meter, a current meter, a voltage meter, a weight meter. However, the system is not limited to these examples. The system may comprise further entities such an user interface, a power supply, a control unit, a screen.

The metering device, as used herein, is to be understood broadly and may relate to any device that is configured to measure a physical value, e.g. current, voltage, energy, weight, pressure. The metering device may comprise an interface to exchange data to a computer unit that is part of the system for metering. The metering device may comprise a power supply, an internal control unit and a measurement sensor.

The term computer unit, as used herein, is to be understood broadly and may relate to any logic that is configured to process data from a metering device and to output a result (e.g. processed measurement result: consumed energy). The computer unit may comprise hardware ressources (i.e. hardware components), such as a mainboard, storages means (e.g. RAM, ROM, disk drive, NAND flash etc.), a central processing unit, a graphic card, one or more interfaces etc. The computer unit may be configured to execute software. The computer unit may comprise software to execute the system, such as a bootloader and an operating system (OS). The computer unit may be configured to execute metering software and non metering software.

The term virtualization, as used herein, is to be understood broadly and may relate to the process of running a virtual instance of a computer system in a layer abstracted from the actual hardware. It may refer to running multiple operating systems on a computer system simultaneously. Virtualization may offer the ability to run different operating systems. Virtualization may offer a way to segment a large system into many smaller parts, allowing a server to be used more efficiently by a number of different users or applications with different needs. Virtualization may allow for isolation, keeping programs running inside of a virtual machine safe from the processes taking place in another virtual machine on the same host. This may be advantageous in terms of efficiency and safety.

The terms first group and second group, as used herein, are to be understood broadly and relate to a division of the hardware resources in a first part and a second part by means of the virtualization. In other words, the first group and second group relate virtual instances of the hardware resources. However, the system may further be configured to provide a virtualization to a further group.

The term metering software, as used herein, is to be understood broadly and may relate to any software that is crucial for executing the metering device and processing measurement data (i.e. metering data). The metering software comprises applications to filter raw data of the measurements. The metering software may comprise applications to calucate measurement values based on the filtered raw data. The metering software may relate to any software that is legally relevant for the metering. The legally relevant software in general may have to be certified by official organisations (e.g. bureau of standards). In case, an update of the system is required, such metering software may have to be certified again in case it is amended.

The term non metering software, as used herein, is to be understood broadly and may relate to any software that is not crucial for executing the metering device and processing measurement data. The non metering software doesn't have to be certified by official organizations.

The term cannot interfere, as used herein, means that the non metering software is not able to amend the metering software in any way. The metering software and the non metering software are executed in virtual instances (i.e. first group and second group) that are isolated from each other.

The term trusted execution environment (TEE), as used herein, relates to an isolated processing environment in wich applications can be securely executed irrespective of the rest the system. A trusted execution environment may be a secure area of a main processor. It may help code and data loaded inside it to be protected with respect to confidentiality and integrity. Data integrity may prevent unauthorized entities from outside the TEE from altering data, while code integrity prevents code in the TEE from being replaced or modified by unauthorized entities. A TEE as an isolated execution environment provides security features such as isolated execution, integrity of applications executing with the TEE, along with confidentiality of their assets. In general terms, the TEE offers an execution space that may provide a higher level of security for trusted applications running on the device than a rich operating system and more functionality than a secure element. In the present disclosure, metering software may be executed in the TEE and non metering software may executed in the operating system of the computer unit.

The term hyper visor, as used herein, may relate to a program for creating and running virtual machines. A virtual machine is an emulated equivalent of a computer system that runs on top of another system. Virtual machines may be based on computer architectures and provide the functionality of a physical computer. In the present disclosure, for the first group a first virtual machine may be generated and may serve as an operating system for the metering software and for the second group a second virtual machine may be generated and may serve as an operating system for the non metering software.

The term container technology, as used herein, is to be understood broadly and may relate to the use of so called containers. Container in general may contain applications in a way that keeps them isolated from the host system that they run on. In a way, containers may behave like a virtual machine. To the outside world, they can look like their own complete system. But unlike a virtual machine, rather than creating a whole virtual operating system, containers don't need to replicate an entire operating system, only the individual components they need in order to operate. This may give a significant performance boost and may reduce the size of the application. They may also operate much faster, as unlike traditional virtualization the process is essentially running natively on its host, just with an additional layer of protection around it. In the present disclosure, different containers may be generated for the first group and the second group to execute the metering software and and the non metering software. The containers run on the operating system of the computer unit.

The term exclusive interface, as used herein, is to be understood broadly and may relate to an interface that is exclusively controlled by the metering software in the first group of the computer unit. The exclusive interface may comprise one of the following: a serial port, a network interface, USB (Universal Serial Bus), CAN (Control Area Network), or other.

The term screen, as used herein, is to be understood broadly and relates to any hardware display configured to present data (metering data and non metering data). The screen may preferably be controlled by the metering software executed in the first group.

The term display composition, as used herein, is to be understood broadly and may relate an arrangement of information on a screen. The display composition may further relate to an underlying data transmission.

The term software interface, used herein, is to be understood broadly and may relate to an interface configured to exchange data. The software interface may be controlled by the first group respectively the metering software executed in the first group or another software executed in the first group.

The energy meter, as used herein, is to be understood broadly and may relate to a device configured to measure an energy consumption (e.g. energy consumption of an electrical vehicle charger).

The term secure boot, as used herein, is to be understood broadly and may relate to a security feature configured to prevent malicious software from loading when the system starts up (boots).

The term integrity check, as used herein, is to be understood broadly and may relate to any check whether data is real and/or safeguarded from unauthorized modification. The integrity check may be carried out in the start-up phase and therefor relate to the boot process of the system (including the metering software and any hardware of the metering device) and corresponding software (e.g. operation system software). The integrity check may be performed for metering software and/or all components (hardware and software) involved in the start up phase. The integrity check may lead to an integrity result (failed integrity check or passed integrity check). During an integrity check measurement data may be logged for documentation. The integrity check may be executed in the first group and for the software executed in the first group and for the underlying hardware of the system and corresponding software in lower layers.

The term OS kernel integrity measurement features, as used herein, is to be understood broadly and may relate any features of operating systems that measure and appraise integrity of files, e.g., the Linux Integrity Measuremnt Architecture.

The term proof, as used herein, is to be understood broadly and may relate to any information configured to describe a result of an executed integrity check.

The term remote attestation, as used herein, is to be understood broadly and may relate to a security mechanism that allows remote observers to check or view a proof of integrity, e.g., using a TPM and PCRs or other roots of trust and integrity measurement means.

The term integrity measurement, as used herein, is to be understood broadly and may relate to any intermediate result or end result of an executed integritity check and corresponding produced integrity check data.

The term CPU ring/privilege, as used herein, is to be understood broadly and may relate to structural layers that limit interaction between installed applications on a computer (or on virtualized ressources) and core processes. In the present disclosure the CPU ring/privilege are used for the metering software in the first group and the non metering software in the second group.

The term exception level, as used herein, is to be understood broadly and may relate to a specific condition which comprises specific privileges to control system register accessability and instruction availability. There may exist a plurality of different exceptions levels for the first group and the second group of the system and their respective metering software and non metering software.

The term MMU, as used herein, is to be understood broadly and may relate to any hardware component that manages physical computer memory and provides isolated virtual memory spaces to different applications of a system.

The term TrustZone, as used herein, is to be understood broadly and may relate to a hardware mechanism implemented in the system that breaks the execution environment into secure and non-secure memory, peripherals, and functions.

The charging station, as used herein, is to be understood broadly and may relate to any station configured to charge an electrical vehicle. The charging station may comprise a power supply and means for connecting and transmission of electrical energy to an electrical vehicle. The system described above may comprise an energy meter when used in the charging station.

Any disclosure and embodiments described herein relate to the methods, the systems, the devices, the computer program element lined out above and vice versa. Advantageously, the benefits provided by any of the embodiments and examples equally apply to all other embodiments and examples and vice versa.

### BRIEF DESCRIPTION OF THE DRAWINGS

In the following, the present disclosure is described exemplarily with reference to the enclosed figures, in which
- **Figure 1**: shows a schematic illustration of an example system for metering; and
- **Figure 2**: shows a schematic illustrations of a part of an example system for metering;
- **Figure 3**: shows a schematic illustration of an example charging station for electrical vehicles.

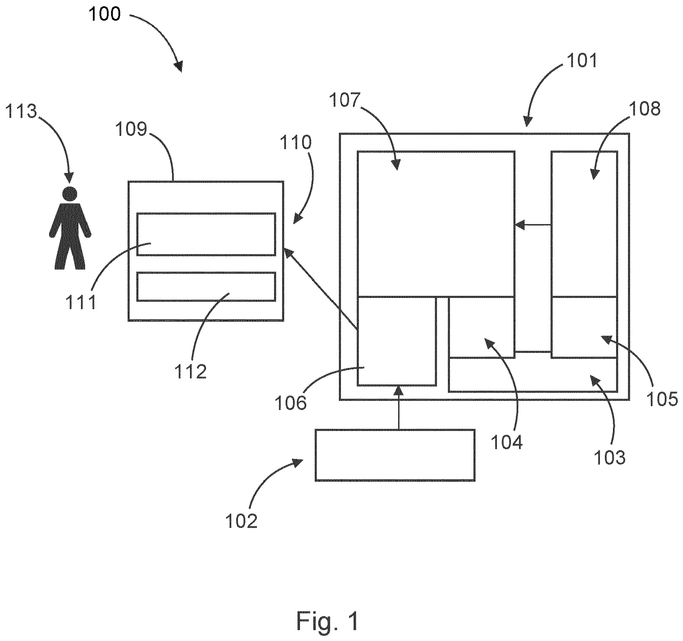

Figure 1 shows a schematic illustration of an example system 100 for metering. The system 100 comprises a computer unit 101 and a metering device 102. The computer unit 100 comprises hardware resources 103. The hardware resources 103 may comprise a central processing unit (CPU), a memory, a graphic card, a mainboard, an interface. The computer unit 100 is configured to virtualize these hardware ressources 103 to a first group 104 and a second group 105. The computer unit is further configured to execute metering software 107 of the metering device 102 in the first group 104 and non-metering software 108 in the second group 105. The computer unit 101 is further configured to generate a display composition 110 for metering data 111 and non metering data 112 on a screen 109. The system comprises a screen 109 for displaying metering data 111 and non metering data 112. The computer unit 101 executes software for generating the display composition in the first group. The computer unit may further be configured to provide an software interface for data exchange between the non metering software 108 and the screen 109. The software interface may be executed in the first group. In other words, the first group 104 may be responsible for displaying the non-metering data on the screen 109. The first group respectively the metering software executed in the first group is configured to control the software interface for data exchange with the second group. The displaying of non metering data on the screen by means of the first group may also be called display remoting. The computer unit 101 may further comprise an exclusive hardware interface 106. The exclusive hardware interface 106 is used to connect the metering device 102 and the computer unit 101. The exclusive hardware interface 106 may be a serial port. The exclusive hardware interface 106 may be controlled by the first group 104. The metering device may be in the present example an energy meter used to measure an energy consumption in a charging station for electric vehicles (not shown). A user 113 may interact with the screen 109, in particular with the non metering data 112 by means of an user interface. The user 113 is not able to amend the metering data 111.

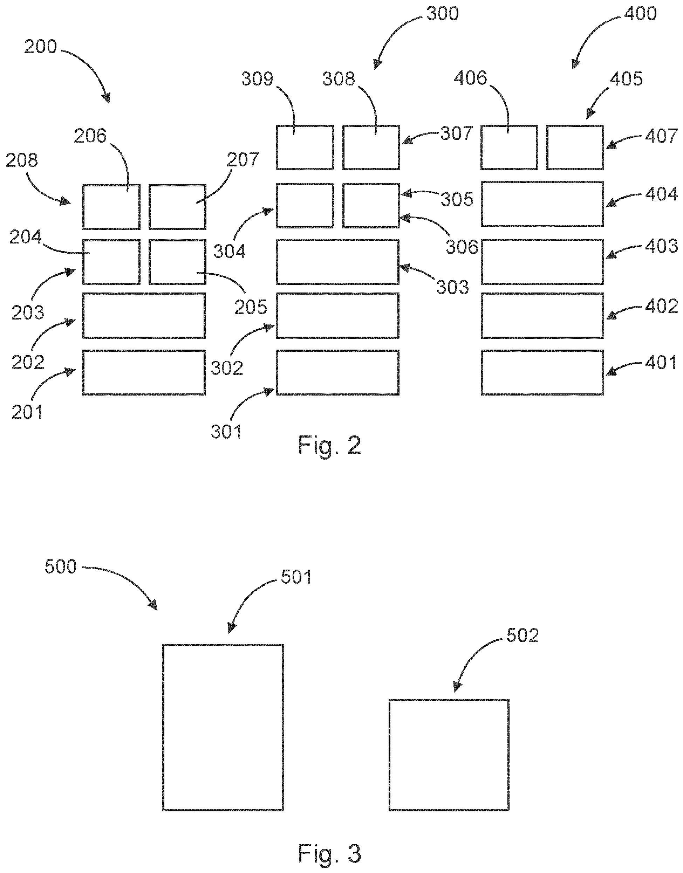

Figure 2 shows three different schematic level representations of the computer unit of an example system for metering.

The first schematic level representation 200 comprises as lowest level a ROM level 201 that relates to the hardware ressources of the computer unit. The next level relates to a bootloader level 202 that relates to the software is executed in a start up phase. The third level 203 relates to the virtualization of the hardware ressources 201. In the present example the third level comprises an operating system 204 for executing the non metering software 206 and a trusted execution environment 205 for executing the metering software 207. The forth level comprises in the present example the application level of the metering software 207 and the non metering software 206.

The second schematic level representation 300 comprises again as lowest level a ROM level 301 that relates to the hardware ressources of the computer unit. The next level relates to a bootloader level 302 that relates to the software executed in a start up phase. The third level 303 relates to the virtualization of the hardware ressources 301. In the present example a hyper visor 303 generates two virtual machines for an operating system 304 for executing the non metering software and an operating system 305 for executing the metering software depicted in the fourth level 306. The fifth level 307 comprises in the present example the application level of the metering software 308 and the non metering software 309.

The third schematic level representation 400 comprises again as lowest level a ROM level 401 that relates to the hardware ressources of the computer unit. The next level relates to a bootloader level 402. The third level relates to an operating system level 403. The fourth level relates to a container level 404 that provides for each of the first group and second group containers that are isolated from each other. In the fifth level 407, the application level, metering software 405 is executed in a container and non metering software 406 is executed in a different container.

Figure 3 shows a charging station 500 for electrical vehicels. The charging station 500 comprises an electrical charger 501 for electrical vehicles and a system for metering 502 as described above.

In the following, a summary of the main effects and main advantages of the present disclosure is provided:

### General Aspects:

The invention proposes to virtualize hardware resources in order to execute metering software and non metering software in virtual environments separated from each other. Hence, it is possible to update the non metering software without interfering with the metering software. This may be advantageous in terms of cost savings as no further hardware is needed due to the virtualization. This may be advantageous in terms of efficiency as no further cerfication of the metering software is required.

Measurement components can be parts of larger systems, e.g., an active energy meter can be a part of a charging station for electric vehicles. Depending on the use of the system, the measurement component may have to be certified to fulfill legal requirements. Non-metering components may require frequent updates of their software, while legally relevant parts of the system may be changed infrequently since changes would often require a re-certification.

Physically separating the legally relevant metering components from other parts of the system, e.g., by running them on separate computers, is a common solution to the problem.

In the solution described here, legally relevant metering software and other, non-metering software may be run on the same processing unit, sharing processing resources, the execution infrastructure and peripherals. This may advantageously lead to a less need of hardware, a simplified system, and an improved user experience.

In the solution described here, legally relevant metering SW and other, non-metering software may be run on the same processing unit,
sharing processing resources (e.g., CPU, memory) and based on the same execution infrastructure (e.g., ROM, bootloaders, hypervisors, OS kernel, user space initialization, container runtimes).

The legally relevant metering software may be isolated from the non metering software, so that the non-metering SW cannot interfere with the metering functionality, using resource protection features of e.g., an operating system, hypervisor, Linux containers or trusted execution enclave. The legally relevant metering SW may be connected to and in control of a display that can display both legally relevant metering information and other information.

Hardware virtualization technologies may be used to share resources between metering components and non-metering components.

The hardware virtualization techniques can be e.g., hypervisors, containers, or Trusted Executions Environments (TEEs, e.g., TrustZone based secure execution environments).

The respective hardware virtualization technology may provide the needed isolation between the components at run-time, and may enforce the needed restrictions to device access for components and may allow for the needed interaction between components.

Resources that may be shared between legally relevant metering components and non-metering components may be exclusively controlled by the legally relevant component with a restricted and controlled interface offered to non-metering components.

Secure boot may be used to guarantee the integrity of the metering software and configuration at load-time, i.e., a chain of trust from bootloader into the user space containing metering component software and configuration may be established.

Both legally relevant (LR) metering and non-LR components may run on (virtual) compute environments (CE), e.g., processes, containers, hypervisor guests. Hardware resources may be virtualized and shared between LR and non-LR components, e.g., as virtual memory, virtual CPU, virtual machine (hypervisor) or other (TEE). Isolation between the compute environments at run-time may be enforced by e.g., CPU rings/privilege and exception levels, MMUs, TrustZone HW.

Metering HW may be accessible only from the CE of the LR SW, e.g., LR equipment connected through serial ports, network interfaces, USB (Universal Serial Bus), CAN (Control Area Network), or other.

Display hardware may accessible from an LR component only. Access to the display for other components may be possible through defined interfaces of the LR component only, display composition is done by the LR component.

The LR software may offer an interface to the non-LR SW through e.g., a socket, using e.g., a display server protocol (X11, Way-land) or web technologies. The display composition inside the LR SW may ensure that LR information shown may always be on top and clearly distinguishable from non-LR information.

At load-time, secure boot may be used to ensure the integrity of the execution infrastructure (EI), i.e., the integrity of all the components in the boot chain up to the TEE, hypervisor, or OS kernel/parameters/device tree. In a container based implementation, the integrity measurements may extend into user-space using OS integrity measurement features.

Evidence of the integrity of the LR components (e.g., a cryptographic hash of code and configuration), can be shown on the display at device/system startup. Changes to the LR components can be logged inside the trusted execution infrastructure.

A failed integrity check of the execution infrastructure can lead to disabling of the device or the operation without legal metering. A failed integrity check of a LR component can lead to disabling of the device, operation without legal metering or operation with limited legal metering features.

### REFERENCE SIGNS

- 100, 502: system
- 101: computer unit
- 102: metering device
- 103: hardware ressources
- 104: first group
- 105: second group
- 106: interface
- 107: metering software
- 108: non metering software
- 109: screen
- 110: display composition
- 111: metering data
- 112: non metering data
- 113: user
- 200, 300, 400: schematic level representation
- 201, 301, 401: ROM level
- 202, 302, 402: bootloader level
- 203, 303: virtualization level
- 204: operating system
- 205: trusted execution environment
- 206, 308, 406: non metering software
- 207, 309, 405: metering software
- 208, 307, 407: application level
- 304: operating system for non metering software
- 305: operating system for metering software
- 306, 403: operating system level
- 404: container level
- 500: charging station
- 501: electrical charger

## Claims

1. System (100, 502) for metering, comprising:
a metering device (102) for metering;
a computer unit (101) configured to provide a virtualization of its hardware resources (103, 201, 301) to a first group (104) and to a second group (105);
the computer unit (101) further configured to execute metering software (107, 207, 309, 405) for the metering device (102) on the first group (104) and non metering software (108, 206, 308, 406) on the second group (105) such that the non metering software (108, 206, 308, 406) cannot interfere with the metering software (107, 207, 309, 405); wherein the virtualization comprises a trusted execution environment (205) for the first group (104);
wherein the metering software (107, 207, 309, 405) comprises applications to filter raw data of measurements;
wherein the system further comprises a screen (109) for displaying metering data (111) and non metering data (112); and
wherein the computer unit (101) is further configured to generate a display composition (110) for metering data (111) and non metering data (112) on the screen (109), and wherein a software for generating the display composition (110) is executed in the first group (104).

2. System (100, 502) according to claim 1, wherein the virtualization is based on a hyper visor (303).

3. System (100, 502) according to claim 1 or 2, wherein the virtualization is based on container technology.

4. System (100, 502) according to any one of the preceding claims, further comprising an exclusive interface for connecting the metering device (102) with the computer unit (101), and wherein the metering device (102) and the computer unit (101) are connected by the exclusive interface.

5. System (100, 502) according to any one of the preceding claims, wherein the computer unit (101) is configured to provide a software interface for data exchange between the non metering software (108, 206, 308, 406) and the screen (109), wherein the software interface is executed in the first group (104).

6. System (100, 502) according to any one of the preceding claims, wherein the computer unit (101) is configured to provide an access to the metering device (102) exclusively via the metering software (107, 207, 309, 405).

7. System (100, 502) according to any one of the preceding claims, wherein the metering device (102) is an energy meter.

8. System (100, 502) according to any preceding claims, wherein the system (100, 502) is configured to be booted by secure boot.

9. System (100, 502) according to any one of the preceding claims,
wherein the system (100, 502) is configured to provide an integrity check in a start-up phase; and/or
wherein an integrity of the metering software (107, 207, 309, 405) is ensured using OS kernel integrity measurement features; and/or
wherein a proof of the integrity of the metering SW is shown on a screen (109); and/or
wherein the integrity of the metering software (107, 207, 309, 405) can be proven to remote observers using remote attestation; and/or
wherein integrity measurements of the integrity check are logged inside the first group (104); and/or
wherein a failed integrity check leads to disabling the metering device (102) or to an operation of the system (100, 502) without metering or to an operation of the sytem with limited metering functionality.

10. System (100, 502) according to any one of the preceding claims, wherein the first group (104) and the second group (105) are isolated by at least one of the following: CPU rings/privilege, exception level, memory management unit (MMU), TrustZone hardware (HW).

11. Charging station (500) for electrical vehicles, comprising a system (100, 502) according to any one of the claims 1 to 10.

12. Use of a system (100, 502) according to any one of the claims 1 to 10 in a charging station (500).

## Patentansprüche

1. System (100, 502) zum Messen, umfassend:
eine Messvorrichtung (102) zum Messen;
eine Computereinheit (101), die dazu ausgelegt ist, einer ersten Gruppe (104) und einer zweiten Gruppe (105) eine Virtualisierung ihrer Hardwareressourcen (103, 201, 301) bereitzustellen;
wobei die Computereinheit (101) ferner dazu ausgelegt ist, eine Messsoftware (107, 207, 309, 405) für die Messvorrichtung (102) an der ersten Gruppe (104) und eine Nichtmesssoftware (108, 206, 308, 406) an der zweiten Gruppe (105) auszuführen, sodass die Nichtmesssoftware (108, 206, 308, 406) die Messsoftware (107, 207, 309, 405) nicht stören kann;
wobei die Virtualisierung eine vertrauenswürdige Ausführungsumgebung (205) für die erste Gruppe (104) umfasst;
wobei die Messsoftware (107, 207, 309, 405) Anwendungen zum Filtern von Rohdaten von Messungen umfasst;
wobei das System ferner einen Bildschirm (109) zum Anzeigen von Messdaten (111) und Nichtmessdaten (112) umfasst; und
wobei die Computereinheit (101) ferner dazu ausgelegt ist, eine Anzeigezusammensetzung (110) für Messdaten (111) und Nichtmessdaten (112) auf dem Bildschirm (109) zu erzeugen, und wobei eine Software zum Erzeugen der Anzeigezusammensetzung (110) in der ersten Gruppe (104) ausgeführt wird.

2. System (100, 502) nach Anspruch 1, wobei die Virtualisierung auf einem Hypervisor (303) basiert.

3. System (100, 502) nach Anspruch 1 oder 2, wobei die Virtualisierung auf Container-Technologie basiert.

4. System (100, 502) nach einem der vorhergehenden Ansprüche, ferner umfassend eine exklusive Schnittstelle zum Verbinden der Messvorrichtung (102) mit der Computereinheit (101), und wobei die Messvorrichtung (102) und die Computereinheit (101) durch die exklusive Schnittstelle verbunden sind.

5. System (100, 502) nach einem der vorhergehenden Ansprüche, wobei die Computereinheit (101) dazu ausgelegt ist, eine Softwareschnittstelle zum Datenaustausch zwischen der Nichtmesssoftware (108, 206, 308, 406) und dem Bildschirm (109) bereitzustellen, wobei die Softwareschnittstelle in der ersten Gruppe (104) ausgeführt wird.

6. System (100, 502) nach einem der vorhergehenden Ansprüche, wobei die Computereinheit (101) dazu ausgelegt ist, Zugriff auf die Messvorrichtung (102) ausschließlich über die Messsoftware (107, 207, 309, 405) bereitzustellen.

7. System (100, 502) nach einem der vorhergehenden Ansprüche, wobei die Messvorrichtung (102) ein Energiemessgerät ist.

8. System (100, 502) nach einem der vorhergehenden Ansprüche, wobei das System (100, 502) dazu ausgelegt ist, durch Secure Boot gestartet zu werden.

9. System (100, 502) nach einem der vorhergehenden Ansprüche,
wobei das System (100, 502) dazu ausgelegt ist, eine Integritätsprüfung in einer Startphase bereitzustellen; und/oder
wobei eine Integrität der Messsoftware (107, 207, 309, 405) unter Verwendung von OS-Kernel-Integritätsmessfunktionen sichergestellt wird; und/oder wobei ein Nachweis der Integrität der Mess-SW auf einem Bildschirm (109) gezeigt wird; und/oder
wobei die Integrität der Messsoftware (107, 207, 309, 405) für Fernbetrachter unter Verwendung einer Fernattestierung nachgewiesen werden kann; und/oder wobei Integritätsmessungen der Integritätsprüfung innerhalb der ersten Gruppe (104) protokolliert werden; und/oder
wobei eine fehlgeschlagene Integritätsprüfung zu einer Deaktivierung der Messvorrichtung (102) oder zu einem Betrieb des Systems (100, 502) ohne Messung oder zu einem Betrieb des Systems mit begrenzter Messfunktionalität führt.

10. System (100, 502) nach einem der vorhergehenden Ansprüche, wobei die erste Gruppe (104) und die zweite Gruppe (105) durch mindestens eines der Folgenden isoliert sind:
CPU-Ringe/Privileg, Ausnahmestufe, Speicherverwaltungseinheit (MMU), TrustZone-Hardware (HW).

11. Ladestation (500) für Elektrofahrzeuge, die ein System (100, 502) nach einem der Ansprüche 1 bis 10 umfasst.

12. Verwendung eines Systems (100, 502) nach einem der Ansprüche 1 bis 10 in einer Ladestation (500).

## Revendications

1. Système (100, 502) de mesure, comprenant :
un dispositif de mesure (102) ;
une unité informatique (101) configurée pour fournir une virtualisation de ses ressources matérielles (103, 201, 301) à un premier groupe (104) et à un deuxième groupe (105) ;
l'unité informatique (101) étant configurée en outre pour exécuter un logiciel de mesure (107, 207, 309, 405) pour le dispositif de mesure (102) sur le premier groupe (104) et un logiciel de non-mesure (108, 206, 308, 406) sur le deuxième groupe (105) de telle sorte que le logiciel de non-mesure (108, 206, 308, 406) ne puisse pas interférer avec le logiciel de mesure (107, 207, 309, 405) ;
dans lequel la virtualisation comprend un environnement d'exécution de confiance (205) pour le premier groupe (104) ;
dans lequel le logiciel de mesure (107, 207, 309, 405) comprend des applications servant à filtrer des données brutes des mesures ;
dans lequel le système comprend en outre un écran (109) servant à afficher des données de mesure (111) et des données de non-mesure (112) ; et
dans lequel l'unité informatique (101) est en outre configurée pour générer une composition d'affichage (110) pour les données de mesure (111) et les données de non-mesure (112) sur l'écran (109), et dans lequel un logiciel servant à générer la composition d'affichage (110) est exécuté dans le premier groupe (104).

2. Système (100, 502) selon la revendication 1, dans lequel la virtualisation est basée sur un hyper viseur (303).

3. Système (100, 502) selon la revendication 1 ou 2, dans lequel la virtualisation est basée sur une technologie de conteneurs.

4. Système (100, 502) selon l'une quelconque des revendications précédentes, comprenant en outre une interface exclusive pour la connexion du dispositif de mesure (102) à l'unité informatique (101), et dans lequel le dispositif de mesure (102) et l'unité informatique (101) sont reliés par l'interface exclusive.

5. Système (100, 502) selon l'une quelconque des revendications précédentes, dans lequel l'unité informatique (101) est configurée pour fournir une interface logicielle pour l'échange de données entre le logiciel de non-mesure (108, 206, 308, 406) et l'écran (109), et dans lequel l'interface logicielle est exécutée dans le premier groupe (104).

6. Système (100, 502) selon l'une quelconque des revendications précédentes, dans lequel l'unité informatique (101) est configurée pour fournir un accès au dispositif de mesure (102) exclusivement via le logiciel de mesure (107, 207, 309, 405).

7. Système (100, 502) selon l'une quelconque des revendications précédentes, dans lequel le dispositif de mesure (102) est un compteur d'énergie.

8. Système (100, 502) selon l'une quelconque des revendications précédentes, le système (100, 502) étant configuré pour être démarré par un démarrage sécurisé.

9. Système (100, 502) selon l'une quelconque des revendications précédentes,
le système (100, 502) étant configuré pour fournir un contrôle d'intégrité dans une phase de démarrage ; et/ou dans lequel une intégrité du logiciel de mesure (107, 207, 309, 405) est assurée à l'aide de caractéristiques de mesure d'intégrité de noyau d'OS ; et/ou dans lequel une preuve de l'intégrité du logiciel de mesure est montrée sur un écran (109) ; et/ou dans lequel l'intégrité du logiciel de mesure (107, 207, 309, 405) peut être prouvée à des observateurs distants au moyen d'une attestation à distance ; et/ou dans lequel les mesures d'intégrité du contrôle d'intégrité sont consignées à l'intérieur du premier groupe (104) ; et/ou
dans lequel un échec de la vérification d'intégrité conduit à la désactivation du dispositif de mesure (102) ou à un fonctionnement du système (100, 502) sans mesure ou à un fonctionnement du système avec une fonctionnalité de mesure limitée.

10. Système (100, 502) selon l'une quelconque des revendications précédentes, dans lequel le premier groupe (104) et le deuxième groupe (105) sont isolés par l'un au moins des éléments suivants :
anneaux/privilèges CPU, niveau d'exception, unité de gestion de mémoire (MMU), matériel (HW) TrustZone.

11. Station de charge (500) pour véhicules électriques comprenant un système (100, 502) selon l'une quelconque des revendications 1 à 10.

12. Utilisation d'un système (100, 502) selon l'une quelconque des revendications 1 à 10 dans une station de charge (500).
